# EUROPÄISCHE PATENTSCHRIFT

(11) **EP 0 669 715 B1**
(45) Veröffentlichungstag und Bekanntmachung des Hinweises auf die Patenterteilung: **19.07.2000**
(21) Anmeldenummer: 95102043.7
(22) Anmeldetag: 15.02.1995
(51) Int. Cl.: H03J 9/06, G06K 11/18, H03J 9/00

(54) **Betätigungsvorrichtung für eine ortsfeste Bedienung an einem elektronischen Gerät oder an einem Fernbedienungsgeber hierfür**
Actuating means for a fixed control of an electronic device or of a remote control transmitter for this
Dispositif d'actionnement pour un contrôle fixe d'un appareil électronique ou d'un émetteur de télécommande pour celui-ci

(30) Priorität: 24.02.1994 DE 4405962
(43) Veröffentlichungstag der Anmeldung: 30.08.1995
(73) Patentinhaber: LOEWE OPTA GmbH, 96317 Kronach (DE)
(72) Erfinder: Schaas, Gerhard, Dipl.-Ing., D-96472 Rödental (DE)

(56) Entgegenhaltungen:
- EP-A- 0 382 352
- EP-A- 0 382 353
- EP-A- 0 517 063
- WO-A-89/04515
- GB-A- 2 260 598

## Beschreibung

Die Erfindung betrifft eine Betätigungsvorrichtung für eine ortsfeste Bedienung an einem elektronischen Gerät oder an einem Fernbedienungsgeber hierfür mit den in den Oberbegriffen der Ansprüche 1 und 2 angegebenen Merkmalen.

Eine gattungsgemäße Betätigungsvorrichtung ist aus der GB 2 260 598 A bekannt. Das walzenförmige Betätigungselement ist an einem als Schwinge ausgebildeten Trägerelement drehbar und seitlich verschiebbar gelagert.

Die Verwendung eines drehbar gelagerten Betätigungselementes zur Erzeugung von impulsförmigen Signalen zur Steuerung eines unterhaltungselektronischen Gerätes ist aus der DE 28 22 672 C2 bekannt. Bei Betätigung des darin angegebenen Stellrades wird eine in Abhängigkeit von der Drehrichtung und der Drehung selbst entsprechende Anzahl von Impulsen generiert, die einem Computer einer Steuereinrichtung für das elektronische Gerät zugeführt werden. Diese Impulse können direkt oder aber umcodiert verarbeitet werden, je nachdem, wie das Bedienungssystem aufgebaut ist. Die Abarbeitung der empfangenen impulsförmigen Signale erfolgt dabei nach einem im Computer eingeschriebenen Programm. Die Generierung der elektrischen Signale selbst kann in einfachster Ausführung aus einem über einen Kontaktreihen schleifenden Schleifkontakt bestehen oder in einer anderen Ausführung aus einer optoelektrischen Impulsgeberanordnung, bei der eine Lochscheibe mit einem Optokoppler abgetastet wird, der elektrische Impulse entsprechend der Drehrichtung und dem Drehwinkel erzeugt, die der Auswerteschaltung bzw. dem Mikroprozessor zugeführt werden.

Ausgehend von dem bekannten Stand der Technik liegt der Erfindung die Aufgabe zugrunde, eine Betätigungsvorrichtung der gattungsgemäßen Art in eine ortsfeste Bedienungseinrichtung an einem elektronischen Gerät, z.B. unterhaltungselektronischen Gerät, oder in einem Fernbedienungsgeber für ein solches Gerät, aber auch für andere elektrische Geräte, die fernsteuerbar sind, weiterzuentwickeln, derart, daß außer von der Drehung des Betätigungselementes abhängige Einstellsignale zusätzlich ergänzend oder unabhängig von der Drehbewegung weitere Signale erzeugt werden können, die zur weiteren Funktionssteuerung oder von der Drehung abhängigen zusätzlichen Funktionssteuerung des elektrischen Gerätes einsetzbar sind.

Die Aufgabe löst die Erfindung durch die in dem Anspruch 1 angegebene technische Lehre.

Vorteilhafte Weiterbildungen der Erfindung sind in den Unteransprüchen angegeben.

Mit einer seitlichen Ausübung einer Druckkraft auf das Betätigungselement können somit einseitig oder beidseitig des Betätigungselementes vorgesehene Signalgeber mit dem rotierend bewegbaren Betätigungselement gekoppelt werden, wobei Signale gleichzeitig auch durch Drehen erzeugt werden können. Die erzeugten Signale können direkt oder über eine Signalgebereinrichtung umgesetzt als Fernsteuersignale übertragen oder in der Bedienungsschaltung des Gerätes verarbeitet werden. Durch die seitliche Bewegung des Betätigungselementes werden über die Achse oder über ein Trägerelement, an dem das Betätigungselement drehbar gelagert ist, weitere Schaltkontakte betätigt. Darüber hinaus kann im Falle einer Lagerung des Betätigungselementes in einem Trägerelement, das seinerseits schwenkbar gelagert ist, in einer dritten Funktionsebene gleichzeitig oder auch nacheinander ein weiterer Schaltkontakt betätigt werden, indem ein Druck auf das Betätigungselement nach unten ausgeübt wird. In einer anderen Ausführungsform ist vorgesehen, daß das Betätigungselement als Walzenelement ausgebildet und mit der Achse so gelagert ist, daß ein Abkippen seitlich möglich ist, wobei durch die seitliche Kippbewegung entsprechende Schaltkontakte von der Achse aus bzw. einem Träger, in dem das Element gelagert ist, bedient werden. Es ist auch möglich, das Betätigungselement in einen eckigen Trägerrahmen zu legen, der gegen die Kraft von Rückstellfedern in allen Eckenbereichen kippbar ist, wodurch eine Vielzahl von Kontakten betätigt werden können. Es sind also stets zusätzlich zu der Generierung von Impulsen durch das Betätigungselement auch weitere Funktionssteuerungen durch Erzeugen von Schaltsignalen möglich. Darüber hinaus kann auch ein Kontakt in Form eines Schleifkontaktes, z.B. auf einer Widerstandsbahn, ein sich änderndes Signal bei seitlicher Verschiebung zur Erzeugung eines zusätzlichen Signals vorgesehen sein, das von der Auswerteschaltung im Fernbedienungsgeber in Steuerbefehle umgesetzt oder in dem elektrischen Gerät in der Bedieneinheit umgesetzt wird, wenn die Lagerung des Betätigungselementes dort vorgesehen ist. Die einzelnen Möglichkeiten, die durch die Erfindung eröffnet sind, sind in den Unteransprüchen mit angegeben.

Die Erfindung wird nachfolgend anhand der in den Zeichnungen dargestellten Beispiele ergänzend erläutert.

In den Zeichnungen zeigen:
- Fig. 1: in schematischer Darstellung einen Fernbedienungsgeber mit abgenommenem Deckel mit einem Betätigungselement, das gemäß der Erfindung gelagert ist,
- Fig. 2: in schematischer Darstellung ein weiteres Beispiel der Lagerung des Betätigungselementes, um zusätzliche Funktionssteuerungen zu ermöglichen,
- Fig. 3: ein weiteres Ausführungsbeispiel eines Betätigungselementes, das an einem kippbaren Träger befestigt ist, über den weitere Schaltkontakte betätigbar sind,
- Fig. 4: das in Fig. 3 im Teilschnitt dargestellte Ausführungsbeispiel in einer um 90° gedrehten Ansicht,
- Fig. 5: ein weiteres Beispiel, bei dem das Betätigungselement an einer Schaltwippe befestigt ist, und
- Fig. 6: ein Beispiel der Ausbildung eines Signalgebers unter Verwendung eines Segmentrades und eines Magneten mit Feldplatte.

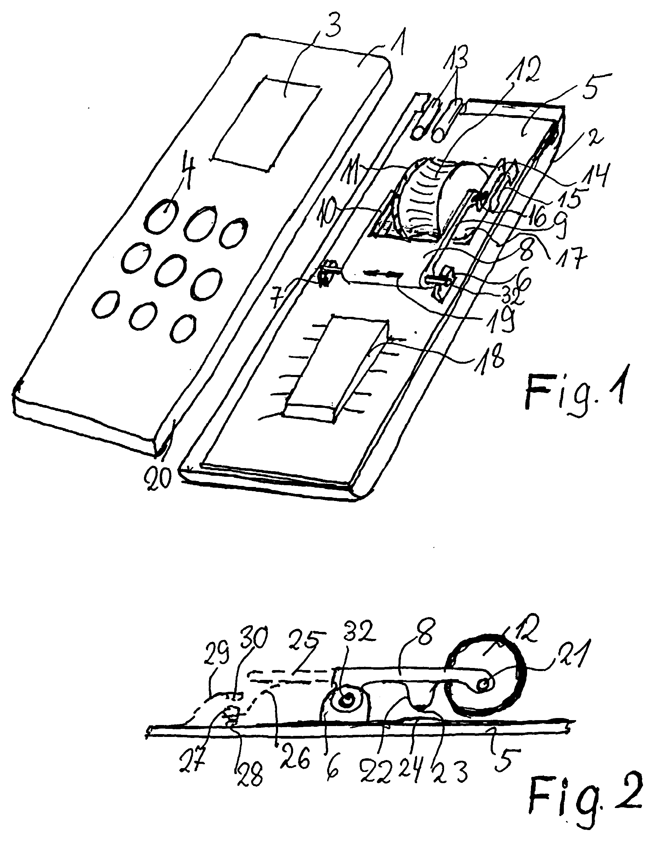

In Fig. 1 ist ein Fernbedienungsgeber dargestellt, der aus einem Untergehäuse 2 und einem Deckel 1 besteht, der mit dem Untergehäuse 2 verbindbar ist. In dem Deckel sind die Tastenelemente 4 eingesetzt. Ferner ist ein Durchbruch 3 vorgesehen, durch den das Betätigungselement 12 nach oben hervorsteht. Der Deckel weist einen Rand 20 auf, der mit dem Rand des Untergehäuses 2 verbindbar ist. Das Betätigungselement 12 ist an einem U-förmigen Träger 19 drehbar gelagert, der beidseitig des Betätigungselementes verlaufende Schenkel 9 und 10 aufweist, die in dem Lager zur Aufnahme der Achse 21 vorgesehen sind. Die Leiterplatte 5 weist im Bereich des Betätigungselementes 12, das eine fingerangepaßte konkave Rändelung aufweist, einen Durchbruch auf, so daß die Bauhöhe insgesamt bei relativ großem Durchmesser des Betätigungsrades klein gewählt werden kann. Der Träger 19 ist schwenkbeweglich auf einer Welle 32 als Wippe gelagert, kann aber auch mit einer entsprechend ausgebildeten Achse schwenkbeweglich in den Lagerböcken 6 und 7, die seitlich angeordnet sind, gelagert sein. Eine starre Führung auf zwei benachbarten Wellen ist aber auch möglich. Es sei angenommen, daß es sich im Ausführungsbeispiel um eine Achse handelt, auf der der Träger 19 schwenkbeweglich gelagert ist. Die Lagerböcke 6 und 7 sind dabei so weit seitlich angeordnet, daß der Träger 19 - der bevorzugt aus Kunststoff besteht, ebenso das Betätigungselement - sowohl in der einen als auch in der anderen Richtung verschiebbar ist, was durch die beiden Pfeile gekennzeichnet ist. Der Verschiebeweg wird dabei zum einen durch die Distanz zwischen den Lagerböcken 6 und 7 einerseits und dem Träger 19 andererseits oder durch lichte Breite der Öffnung 3 bzw. der in der Leiterplatte 5 eingeschnittenen Öffnung begrenzt. Im Ausführungsbeispiel weist nun der rechte Träger 9 im Bereich der Lagerhalterung des Betätigungselementes 12, das drehbar gelagert ist, einen Betätigungsansatz auf, der gegen eine erste Kontaktfeder 14 drückt, wenn der Träger 19 nach rechts verschoben wird. Die Kontaktfeder 14 ist an der Leiterplatte 5 z.B. durch Lötung befestigt. Diese Feder 14 schwenkt in Richtung der zweiten Feder 15 und schließt über den Kontakt 16 den elektrischen Stromkreis, wodurch ein Signal erzeugt wird, das beispielsweise durch die Signalgebereinrichtung 18 an einen integrierten Schaltkreis, der die Signale in Befehlssignale umwandelt, die von dem zu steuernden Gerät verstanden werden, abgibt. Die generierten Signale werden sodann mittels Infrarotlicht über die Infrarotlichtgeberdiode 13 moduliert oder unmoduliert übertragen. Es ist aber auch eine direkte Ansteuerung möglich. Hier kann der Fachmann auf bekannte Ausführungen aus der Fernsteuertechnik zurückgreifen. Ebenso können die Signale auch mittels anderer Trägerwellen, z.B. magnetische Wellen, oder aber auch über ein Kabel an das zu steuernde Gerät übertragen werden. Zur Generierung von Impulsen in Abhängigkeit der Drehbewegung des Betätigungselementes 12 ist ein Segmentrad 11 vorgesehen, das auch eine Lochscheibe sein kann, die in Verbindung mit einem Optokoppler steht, um in Abhängigkeit der Drehbewegung Impulse zu generieren, die zu Steuerzwecken ebenfalls herangezogen werden können. Die Schwenkachse ist parallel zu der Platine 5 angeordnet, ebenso die Drehachse 21 des Betätigungselementes 12. Die für die zusätzliche Funktionssteuerung vorgesehenen Schaltkontakte 14 und 15 können beliebige Ausführungsformen und mehrere in Reihe geschaltete Betätigungskontakte aufweisen. Ferner können zusätzliche einseitig und beidseitig vorgesehen sein, je nachdem, ob auch eine Verschiebung des Trägers 19 in die andere Richtung möglich sein soll. Dadurch ist es möglich, zusätzlich zu der durch Drehbewegung des Betätigungselementes 12 erzeugten Signale weitere Steuersignale gleichzeitig oder zeitlich nacheinander zu erzeugen, die zur Funktionssteuerung herangezogen werden können. Beispielsweise kann durch Drehung des Betätigungselementes 12 der Cursor auf einem Bildschirm verschoben werden und durch seitliche Verschiebung in die eine oder andere Richtung die Funktionssteuerung ausgelöst werden. Zweckmäßigerweise ist der Träger 19 so gelagert, daß er stets parallel zur Leiterplatte geführt werden kann. Wenn darüber hinaus eine dritte Funktionsebene über das gleiche Element gesteuert werden soll, ist es zweckmäßig, den Träger 19 als Wippe auszubilden und ihn gegen die Kraft einer Feder in Richtung der Leiterplatte 5 verschwenkbar zu lagern, wie dies in Fig. 1 auch dargestellt ist. Dabei können unterhalb des Trägers 19 weitere Schaltkontakte zwischen der Trägerunterseite einerseits und der Leiterplatte 5 andererseits vorgesehen sein, die beim Niederdrücken der Wippe geschlossen oder geöffnet werden.

Ein Beispiel dafür ist schematisch in Fig. 2 dargestellt. Auf der Leiterplatte 5 ist ein Lagerbock 6 gezeichnet, an dem schwenkbeweglich eine Wippe 8 angelenkt ist, an deren Ende das Drehlager 21 für das Betätigungselement 12 vorgesehen ist. An der Unterseite ist eine Formkontaktfeder 22 befestigt, die beim Niederdrücken der Wippe 8 mit dem Schaltkontakt 23 auf die Schaltfeder 24, die auf der Leiterplatte aufgebracht ist, aufgreift, wodurch ein Signal erzeugt wird, das über die nicht dargestellten elektrischen Leiterzüge zu den verarbeitenden Schaltungen übertragen wird. In weiterer Ausgestaltung dieser schematisch dargestellten Ausführungsform kann auch vorgesehen sein, daß links ein weiterer Hebelarm 25 befestigt ist, der eine Kontaktfeder 26 trägt, die als Auslöseelement dient und an ihrem Ende Schaltkontakte 27 aufweist, die in der Ruhelage sich an dem Gegenkontakt 28 an der Leiterplatte abstützen und im Falle des Verschwenkens des doppelschenkligen Hebels 8, 25 gegen den Schaltkontakt 30 einer weiteren Kontakfeder 29 greift, die mit einer Leiterbahn der Leiterplatte 5 verbunden ist. Um ohne Schaltfunktion in einer neutralen Position die Hebelarme 8 und 25 halten zu können, ist eine federnde Lagerung notwendig. Solche Stützfedern, die erforderlich sind, um die Wippe praktisch parallel zur Leiterplatte zu halten, sind der Einfachheit halber nicht dargestellt.

Aus den Fig. 1 und 2 ist ersichtlich, daß mit ein und derselben Lagerung zu den durch Drehung des Betätigungselementes generierten Steuersignale in einer zweiten Verschiebeposition weitere Signale erzeugt werden können, ebenso durch Schwenkbewegung weiterer zusätzlicher Steuerfunktionen in einer dritten Funktionsebene gesteuert werden können.

In den Fig. 3 und 4 ist ein anderes Ausführungsbeispiel schematisch dargestellt. Das Betätigungsrad 12, das in Fig. 2 eine konkave Oberflächenrändelung aufweist, ist drehbar in einem kippbar gelagerten Trägerrahmen 33 gelagert. Der Schwenkrahmen 33 ist verschwenkbar um das Lager 32 gelagert. Die Federbelastung ist dabei nicht dargestellt. Die normale Position ist die Mittenposition. Durch Druck auf das Betätigungselement, beispielsweise nach rechts, verschwenkt der Trägerrahmen 33 in die aus Fig. 3 ersichtliche Position, so daß die Kontakte 36 in dem Trägerrahmen mit dem Kontakt 37 auf der Leiterplatte in Berührung gelangen, so daß ein Stromkreis geschlossen wird, während der Stromkreis auf der gegenüberliegenden Seite, gebildet durch den Kontakt 34, an der Leiterplatte 5 und dem Kontakt 35 an dem Trägerrahmen 33 geöffnet wird. Diese Kontakte können darüber hinaus als Gummikontakte ausgebildet sein, so daß eine Federwirkung zusätzlich erzielt wird. Als Stützfedern können solche Gummifederkontakte besondere Konturen aufweisen und die Kontakte selbst innenliegend ausgebildet sein. In jedem Fall ist, wie aus der schematischen Darstellung in Fig. 3 und 4 ersichtlich, durch die Kippbewegung eine zusätzliche Schaltfunktion auslösbar, die zusätzlich zu der durch Drehung des walzenförmigen Betätigungselementes 12 erzielbar ist. Das Beispiel zeigt eine Abdeckung 1 und eine Unterplatte 2, die beispielsweise in einer Bedienungseinheit eingesetzt sein kann, im Teilschnitt vereinfacht schematisch.

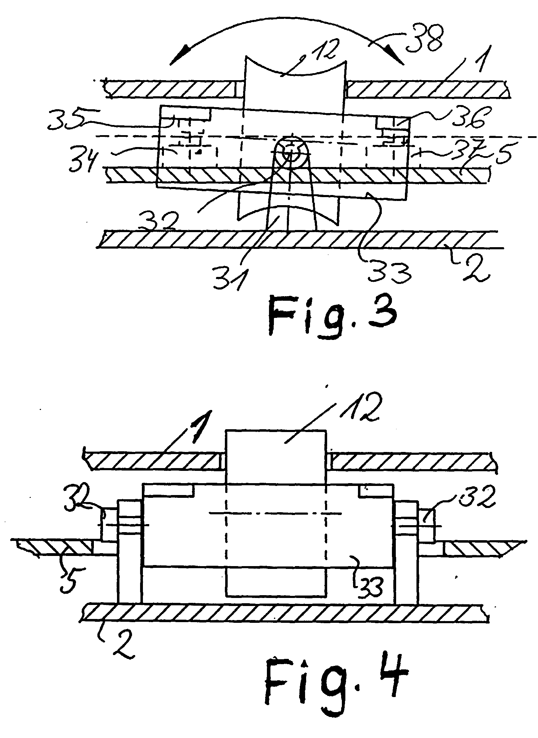

In Fig. 5 ist ein weiteres Ausführungsbeispiel in Anlehnung an das in den Fig. 1 und 2 angegebene Beispiel dargestellt. Die Schaltwippe ist dabei verschwenkbar um eine Achse 32 an Lagerböcken 31 gelagert, die aus der Bodenplatte 2 nach oben hervorstehen. Das Betätigungselement tritt aus einer Austrittsöffnung in der Abdeckplatte 1 hervor. Zwischengefügt ist eine Leiterplatte 5, zu der parallel die Schwenkachse 32 und die Drehachse 31 angeordnet sind. An einem Träger 36 ist ein Schaltkontakt 37 befestigt, der in Wirkverbindung mit einem weiteren Schaltkontakt 38 der Leiterplatte 5 bringbar ist, indem auf das Betätigungselement eine Druckkraft in Richtung der Leiterplatte gegen die Kraft einer nicht dargestellten Feder ausgeübt wird. An dem Schenkel 35 sind die für die Signalgenerierung notwendigen mechanischen Teile befestigt, um in Abhängigkeit von der Drehung des Betätigungselementes 12 Signale zu erzeugen.

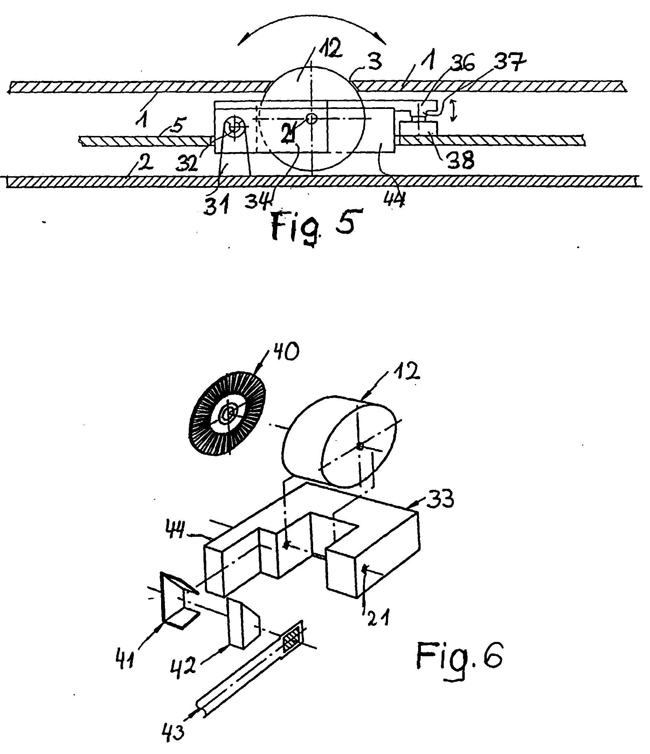

In Fig. 6 ist in einem Ausführungsbeispiel ein verschwenkbarer Trägerrahmen 33 dargestellt, in dem das Betätigungselement 12 auf einer Achse 21 gelagert ist. Mit dem walzenförmigen Betätigungselement ist ein Segmentrad verbunden, das an einer Feldplatte 42 entlanggeführt wird, hinter der sich ein Magnet 42 befindet, der in einem Flußleitblech an dem Seitenträger 44 befestigt ist. Mit der Drehung des Betätigungselementes 12 generieren dabei die Segmente des Segmentrades 40 eine magnetische Flußänderung, die zur Erzeugung eines elektrischen Signales in der Feldplatte führt. Dieses Signal wird in bekannter Weise der Auswerteschaltung zugeführt.

## Patentansprüche

1. Betätigungsvorrichtung für eine ortsfeste Bedienungseinrichtung an einem elektronischen Gerät oder an einem Fernbedienungsgeber zur Bedienung eines elektronischen Gerätes zur Erzeugung von Einstellsignalen für die Steuerung der Gerätefunktionssteuereinrichtungen mit einem manuell betätigbaren, drehbar gelagerten walzenförmigen Betätigungselement, das mit Signalgebern gekoppelt ist, die in Abhängigkeit von der Drehbewegung und/oder der Drehstellung und/oder durch Druck auf das Betätigungselement oder durch Verschieben desselben in Längsrichtung Signale abgeben, die Einstellsignale sind oder aus denen solche in Signalgebereinrichtungen abgeleitet werden, **dadurch gekennzeichnet**, daß das Betätigungselement (12) einseitig oder beidseitig um eine quer zur Längsachse verlaufende Schwenkachse (32) kippbar gelagert ist, und daß das Betätigungselement (12) beim Verbringen in eine Kipp-Position oder nach dem Verbringen in diese mit einem oder mehreren Auslöseelementen (34, 35, 36, 37, 38) eines oder weiterer Signalgeber (18) in Eingriff gelangt, die ein oder weitere elektrische Signale abgeben.

2. Betätigungsvorrichtung nach Anspruch 1 **dadurch gekennzeichnet**, daß das Betätigungselement (12)drehbar und gegen die Kraft einer Feder mit ihrer Achse (21) verschiebbar oder schwenkbeweglich an einem seinerseits auf einer Schwenkachse (32) verschieblichen Trägerelement (9, 10, 19; 33, 35) gelagert ist, und daß über die Achse (21, 32) des Betätigungselementes (12) oder das Betätigungselement (12) selbst über das verschobene Trägerelement (19) ein oder mehrere weitere Auslöseelemente (22, 23, 24) betätigbar sind.

3. Betätigungsvorrichtung nach Anspruch 1 oder 2, dadurch gekennzeichnet, daß die Auslöseelemente (14, 15, 16; 34, 35, 36, 37, 38) und/oder die Signalgeber (18) Schaltkontakte aufweisen, die Wisch-, Ruhe- oder Arbeitskontakte sind.

4. Betätigungsvorrichtung nach einem der vorhergehenden Ansprüche, dadurch gekennzeichnet, daß das Betätigungselement in Längsrichtung der Achse (32) aus einer ersten Stellung in eine zweite Seitenstellung oder aus einer ersten Stellung in zwei Seitenstellungen verbringbar ist.

5. Betätigungsvorrichtung nach Anspruch 4, dadurch gekennzeichnet, daß die weiteren Signalgeber in Abhängigkeit von dem Verschiebeweg des Betätigungselementes (12) kontinuierlich sich ändernde oder ein oder mehrere bestimmte Signale abgeben.

6. Betätigungsvorrichtung nach Anspruch 2, dadurch gekennzeichnet, daß das Betätigungselement (12) mit seinen Achsenden in einer Langlochführung senkrecht oder nahezu senkrecht zur Achse gegen die Kraft einer Feder verschiebbar im Gehäuse des Gerätes oder des Fernbedienungsgebers gelagert ist und daß zwischen den Lagern und den die seitliche Verschiebung begrenzenden Elementen des Betätigungselementes eine bestimmte Distanz vorgesehen ist, um die das Betätigungselement seitlich verschiebbar ist.

7. Betätigungsvorrichtung nach Anspruch 1 oder 2, dadurch gekennzeichnet, daß die Walze eine dem Betätigungsfinger angepaßte konkave Hohlform auf dem Umfang aufweist.

8. Betätigungsvorrichtung nach Anspruch 7, dadurch gekennzeichnet, daß die Walze gerändelt ist.

9. Betätigungsvorrichtung nach Anspruch 4, dadurch gekennzeichnet, daß das Betätigungselement (12) aus der Oberfläche des Bedienungsfeldes der Ortsbedienung oder des Fernbedienungsgebers (1, 2) bogensegmentförmig hervorsteht und der Durchbruch in der Abdeckung (1) seitliche Vergrößerungen zur Verschiebung des Betätigungselementes aufweist.

10. Betätigungsvorrichtung nach einem der vorhergehenden Ansprüche, dadurch gekennzeichnet, daß mit dem Betätigungselement (12) ein Segmentrad (40) gekoppelt ist, das sich beim Betätigen an einem magnetischen Abtaster vorbeibewegt, wobei in Abhängigkeit der Bewegung der Segmente von einer Feldplatte (43) elektrische Signale abgreifbar sind.

11. Betätigungsvorrichtung nach einem der Ansprüche 1 bis 9, dadurch gekennzeichnet, daß mit dem Einstellelement (12) eine Codierscheibe gekoppelt ist, auf die ein Lichtstrahl eines optoelektrischen Abtasters fällt, und daß der optoelektrische Abtaster in Abhängigkeit von der Drehung optische Impulse als Signale abgibt, die direkt oder über eine Signalgebereinrichtung als Stellsignale übertragen werden.

12. Betätigungsvorrichtung nach Anspruch 1,2 oder 6, dadurch gekennzeichnet, daß das wippenförmige Trägerelement ein doppelschenkliger Hebel (8) ist, der über das Schwenklager hinaus eine Verlängerung (25) aufweist, die mit einem oder weiteren Auslöselementen (26, 27, 28, 29, 30) gekoppelt ist, welche in Abhängigkeit der Schwenkbewegung ein oder weitere Signale abgeben.

13. Betätigungsvorrichtung nach Anspruch 1 oder 2, dadurch gekennzeichnet, daß das Betätigungselement (12) in einem Träger (33) gelagert ist, der um eine senkrecht und mittig zur Drehachse (21) des Betätigungselementes (12) verlaufende Schwenkachse (32) verschwenkbar gelagert ist, wobei beide Achsen parallel zu einer Bezugsebene im Gerät oder Fernbedienungsgeber verlaufen, und daß der Träger (33) Kontaktelemente (35, 36) aufweist, die mit Gegenkontaktelementen (34, 37) auf einer Leiterplatte (5) der Betätigungsvorrichtung gegen die Kraft einer Feder verschwenkbar sind.

14. Betätigungsvorrichtung nach Anspruch 1 oder 2, dadurch gekennzeichnet, daß die Achse (21) des Betätigungselementes (12) gegen die Kraft von beidseitig des Betätigungselementes (12) vorgesehenen, die Achsenden untergreifenden Federn bei gleichzeitiger Drehung des Betätigungselementes (12) kippbar gelagert ist, und daß über die Achsenden die Auslöseelemente betätigbar sind.

15. Betätigungsvorrichtung nach Anspruch 14, dadurch gekennzeichnet, daß die Lager zur drehbaren Aufnahme der Achsenenden federnde Stützelemente aufweisen.

## Claims

1. Actuating device for fixed control equipment at electronic apparatus or at a remote control transmitter for operation of electronic apparatus for generation of setting signals for the control of apparatus function control devices with a manually actuable, rotatably mounted roller-shaped actuating element coupled with signal transmitters which in dependence on the rotational movement and/or rotational setting and/or by pressure on the actuating element or by displacement thereof in longitudinal direction issue signals which are setting signals or from which such are derived in signal transmitter devices, characterised in that the actuating element (12) is mounted at one side or both sides to be tiltable about a pivot axis (32) extending transversely to the longitudinal axis and that the actuating element (12) on bringing into a tilt position or after bringing into this comes into engagement with one or more trigger elements (34, 35, 36, 37, 38) of one or further signals transmitters (18) which issue one or more electrical signals.

2. Actuating device according to claim 1, characterised in that the actuating element (12) is mounted to be rotatable and to be displaceable or pivotably movable by its axle (21) against the force of a spring at a support element (9, 10, 19; 33, 35) which in turn is displaceable on a pivot axis (32) and that via the axle (21, 32) of the actuating element (12) or the actuating element (12) itself one or more further trigger elements (22, 23, 24) are actuable by way of the displaced support element (19).

3. Actuating device according to claim 1 or 2, characterised in that the trigger elements (14, 15, 16; 34, 35, 36, 37, 38) and/or the signal transmitters (18) comprise switching contacts, which are wiping, rest or working contacts.

4. Actuating device according to one of the preceding claims, characterised in that the actuating element can be brought in the longitudinal direction of the axle (32) from a first setting into a second lateral setting or from a first setting into two lateral settings.

5. Actuating device according to claim 4, characterised in that the further signal transmitters issue continuously changing or one or more defined signals in dependence on the displacement path of the actuating element (12).

6. Actuating device according to claim 2, characterised in that the actuating element (12) is mounted by its axle ends in a slot guide to be displaceable perpendicularly or almost perpendicularly to the axle against the force of a spring in the housing of the apparatus or the remote control transmitter and that a defined spacing by which the actuating element is laterally displaceable, is provided between the bearings and the elements, which limit the lateral displacement, of the actuating element.

7. Actuating device according to claim 1 or 2, characterised in that the roller has a concave hollow shape, which is matched to the actuating finger, at the circumference.

8. Actuating device according to claim 7, characterised in that the roller is knurled.

9. Actuating device according to claim 4, characterised in that the actuating element (12) protrudes out of the surface of the operating field of the fixed control panel or the remote control transmitter (1, 2) in the manner of a segment of a curve and the passage opening in the cover (1) has lateral enlargements for the displacement of the actuating element.

10. Actuating device according to one of the preceding claims, characterised in that coupled with the actuating element (12) is a segment wheel (40) which on actuation moves past a magnetic scanner, wherein electric signals can be tapped from a field plate (43) in dependence on the movement of the segments.

11. Actuating device according to one of claims 1 to 9, characterised in that coupled with the setting element (12) is a code disc on which a light beam of an opto-electrical scanner is incident, and that the opto-electrical scanner issues, in dependence on the rotation, optical pulses as signals which are transmitted directly or by way of signal transmitting equipment as setting signals.

12. Actuating device according to claim 1, 2 or 6, characterised in that the rocker-shaped support element is a double-armed lever (8), which has beyond the pivot bearing a prolongation (25) which is coupled with one or further trigger elements (26, 27, 28, 29, 30) which issue one or further signals in dependence on the pivot movement.

13. Actuating device according to claim 1 or 2, characterised in that the actuating element (12) is mounted in a support (33) which is mounted to be pivotable about a pivot axle (32) extending vertically and centrally relative to the rotational axle (21) of the actuating element (12), wherein the two axles extend parallel to a reference plane in the apparatus or remote control transmitter, and that the support (33) comprises contact elements (35, 36) which are pivotable with counter-contact elements (34, 37) on a circuitboard (5) of the actuating device against the force of a spring.

14. Actuating device according to claim 1 or 2, characterised in that the axle (21) of the actuating element (12) is mounted to be tiltable against the force of springs, which are provided on both sides of the actuating element (12) and engage under the axle ends, on simultaneous rotation of the actuating element (12), and that the trigger elements are actuable by way of the axle ends.

15. Actuating device according to claim 14, characterised in that the bearings for rotational reception of the axle ends have resilient support elements.

## Revendications

1. Dispositif d'actionnement pour une commande fixe d'un appareil électronique ou d'un émetteur de télécommande commandant un appareil électronique, destiné à générer des signaux de réglage pour la commande des dispositifs de commande des fonctions de l'appareil, avec un élément d'actionnement manuel en forme de rouleau rotatif qui est couplé avec des émetteurs de signaux délivrant, en fonction du mouvement de rotation et/ou de la position en rotation et/ou de la pression sur l'élément d'actionnement ou de la translation de celui-ci dans le sens longitudinal, des signaux qui constituent des signaux de réglage ou à partir desquels de tels signaux sont dérivés dans les dispositifs émetteurs de signaux, caractérisé en ce que l'élément d'actionnement (12) est supporté d'un côté ou des deux côtés de façon à pouvoir basculer autour d'un axe de pivotement (32) perpendiculaire à l'axe longitudinal, et en ce que l'élément d'actionnement (12) se met en prise, lorsqu'il arrive dans une position de basculement ou après qu'il est arrivé dans celle-ci, avec un ou plusieurs éléments déclencheurs (34, 35, 36, 37, 38) d'un ou plusieurs émetteurs de signaux (18) qui délivrent un ou plusieurs signaux électriques.

2. Dispositif d'actionnement selon la revendication 1, caractérisé en ce que l'élément d'actionnement (12) est supporté avec possibilité de rotation et de translation sur son axe (21) contre la force d'un ressort ou pivotant sur un élément de support (9, 10, 19 ; 33, 35) capable pour sa part de translation sur un axe de pivotement (32), et en ce que l'axe (21, 32) de l'élément d'actionnement (12) ou l'élément d'actionnement (12) lui-même peuvent être actionnés par l'intermédiaire d'un ou plusieurs éléments déclencheurs (22, 23, 24).

3. Dispositif d'actionnement selon la revendication 1 ou 2, caractérisé en ce que les éléments déclencheurs (14, 15, 16 ; 34, 35, 36, 37, 38) et/ ou les émetteurs de signaux (18) présentent des contacts de passage, de repos ou de travail.

4. Dispositif d'actionnement selon l'une quelconque des revendications précédentes, caractérisé en ce que l'élément d'actionnement peut être amené, dans le sens longitudinal de l'axe (32), d'une première position à une deuxième position latérale ou d'une première position à deux positions latérales.

5. Dispositif d'actionnement selon la revendication 4, caractérisé en ce que les autres émetteurs de signaux émettent des signaux se modifiant en permanence ou un ou plusieurs signaux définis en fonction du trajet de déplacement de l'élément d'actionnement (12).

6. Dispositif d'actionnement selon la revendication 2, caractérisé en ce que l'élément d'actionnement (12) est supporté aux extrémités de son axe dans un guide à trous allongés perpendiculairement ou presque à l'axe, contre la force d'un ressort, de manière à pouvoir se déplacer dans le boîtier de l'appareil ou de l'émetteur de télécommande, et en ce qu'il est prévu entre les paliers et les éléments de l'élément d'actionnement limitant la translation latérale une certaine distance sur laquelle l'élément d'actionnement peut se déplacer.

7. Dispositif d'actionnement selon la revendication 1 ou 2, caractérisé en ce que le rouleau présente sur sa circonférence une forme creuse adaptée à la patte d'actionnement.

8. Dispositif d'actionnement selon la revendication 7, caractérisé en ce que le rouleau est moleté.

9. Dispositif d'actionnement selon la revendication 4, caractérisé en ce que l'élément d'actionnement (12) dépasse de la surface du panneau de commande de la commande locale ou de l'émetteur de télécommande (1, 2) en formant un segment d'arc et l'ouverture dans le capot (1) est élargie latéralement pour la translation de l'élément d'actionnement.

10. Dispositif d'actionnement selon l'une quelconque des revendications précédentes, caractérisé en ce que l'élément d'actionnement (12) est couplé avec une roue segmentée (40), laquelle passe lors de l'actionnement devant un détecteur magnétique, des signaux électriques pouvant alors être captés par une magnétorésistance (43) en fonction du déplacement des segments.

11. Dispositif d'actionnement selon l'une quelconque des revendications précédentes 1 à 9, caractérisé en ce que l'élément d'actionnement (12) est couplé avec un disque d'encodage qui est atteint par un faisceau lumineux d'un détecteur opto-électrique, et en ce que le détecteur opto-électrique émet en fonction de la rotation des impulsions optiques servant de signaux, qui sont transmises directement ou par l'intermédiaire d'un émetteur de signaux pour servir de signaux de réglage.

12. Dispositif d'actionnement selon la revendication 1, 2 ou 6, caractérisé en ce que l'élément de support en forme de bascule est un levier à deux bras (8) qui présente au-delà du palier pivotant un prolongement (25) couplé avec un ou plusieurs éléments déclencheurs (26, 27, 28, 29, 30) qui émettent un ou plusieurs signaux en fonction du mouvement de pivotement.

13. Dispositif d'actionnement selon la revendication 1 ou 2, caractérisé en ce que l'élément d'actionnement (12) est supporté dans un support (33) qui est supporté avec possibilité de rotation autour d'un axe de pivotement (32) vertical passant au centre par rapport à l'axe de rotation (21) de l'élément d'actionnement (12), les deux axes étant parallèles à un plan de référence dans l'appareil ou l'émetteur de télécommande, et en ce que le support (33) présente des éléments de contact (35, 36) qui peuvent pivoter avec des éléments de contact correspondants (34, 37) sur une carte de circuits imprimés (5) du dispositif d'actionnement contre la force d'un ressort.

14. Dispositif d'actionnement selon la revendication 1 ou 2, caractérisé en ce que l'axe (21) de l'élément d'actionnement (12) est supporté de façon à pouvoir basculer pendant la rotation de l'élément d'actionnement (12) contre la force de ressorts prévus de part et d'autre de l'élément d'actionnement (12) et passant sous les extrémités de l'axe, et en ce que les éléments déclencheurs peuvent être actionnés par l'intermédiaire des extrémités de l'axe.

15. Dispositif d'actionnement selon la revendication 14, caractérisé en ce que les paliers présentent des éléments d'appui élastiques pour recevoir les extrémités de l'axe avec possibilité de rotation.
